# EUROPEAN PATENT APPLICATION

(11) **EP 4 653 484 A1**
(43) Date of publication of application: **26.11.2025**
(21) Application number: 24315238.6
(22) Date of filing: 21.05.2024
(51) Int. Cl.: C08G 61/00, H01M 4/62, H01M 10/052, H01M 10/0525

(54) **NOVEL MATERIAL FOR BATTERY APPLICATIONS**

(71) Applicant: University Of Lancaster, Lancashire LA1 4YW (GB)
(72) Inventor: The designation of the inventor has not yet been filed
(74) Representative: HGF

(57) **Abstract**

A novel material is described, the structure of which is such that it may be termed a conjugated microporous polymer. The material may be prepared by an industrially attractive, one-pot synthesis. The material exhibits advantageous electrochemical properties, making it particularly well-suited for use in battery applications.

## Description

### INTRODUCTION

The present invention relates to a new material suitable for use in battery applications, as well as to a process of making the new material, and its use in battery applications.

### BACKGROUND OF THE INVENTION

Microporous organic polymers (MOPs) are a diverse class of materials that exhibit excellent stability and versatile functionality. MOPs encompass several subclasses including hyper-crosslinked polymers (HCPs),¹ conjugated microporous polymers (CMPs),^{2,3} polymers of intrinsic microporosity (PIMs),⁴ and covalent triazine-based frameworks (CTFs).⁵ The wide range of synthetic strategies for generating MOPs allows for the development of robust and tailored properties for specific applications.

CMPs are an important subclass of MOPs with applications across many areas including gas uptake,⁶ solid-state electrolyte for fuel cell technologies,⁷ and as a nano porous supercapacitor.^{8,9} The amorphous three dimensional framework of CMPs contains microporosity originating from inefficient packing of the polymer chains. This combination of high porosity and electronic activity makes CMPs promising materials for energy storage and conversion technologies.

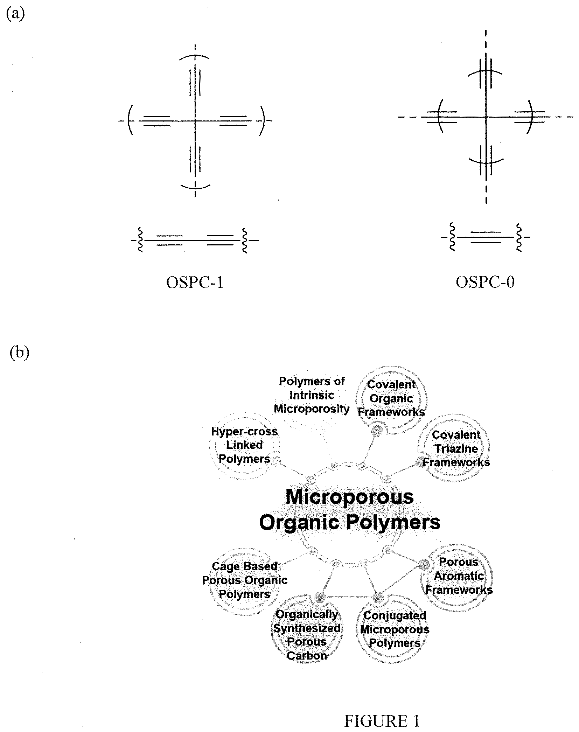

A new member of the CMP family is organically synthesized porous carbon one (OSPC-1)¹⁰, the bulk structure of which is formed from *sp³* carbon nodes linked to one another by *sp* carbons of diacetylene struts (-C≡C-C≡C-), resulting in the 3-dimensional network depicted in Figure 1(a). Although the bulk structure of this material is built entirely with carbon atoms, like diamond or graphite, its synthesis and properties are closer to a porous polymer (Figure 1(b)).

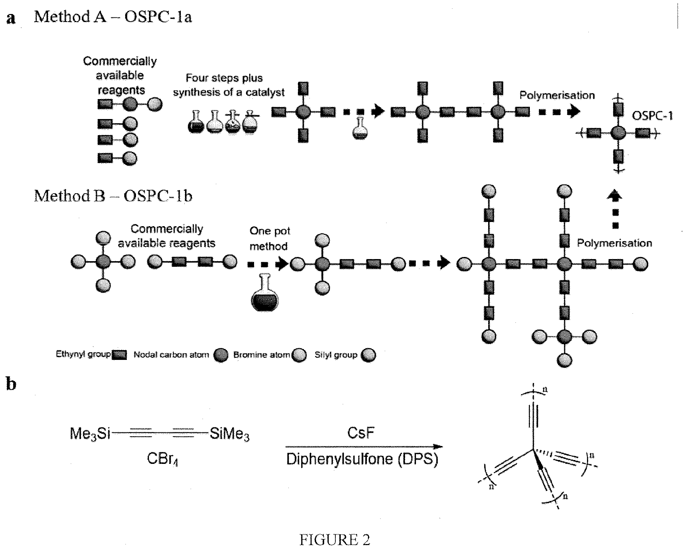

In spite of the complex and low-yielding, six-step synthetic procedure reported (Figure 2, Method A),¹⁰ OSPC-1 generated significant interest due to its performance as an anode in lithium-ion batteries (LIBs). Though it demonstrated a considerably greater capacity for energy storage than graphite at both low and high current densities, it drew most attention for its high resistance to degradation upon cycling. Even after cycling at currents as high as 3000 mA g⁻¹ for 500 cycles, no reduction. in capacity, and crucially, no formation of lithium dendrites was observed in the OSPC-1 based cells, whereas both were seen in the conventional graphite half-cells. This was a significant finding because dendrite formation in commercial LIBs is a major safety concern.^{10,11} Furthermore, many new anode materials designed to outperform graphite suffer from poor cycling stability.¹³ An expansion of the OSPC family of materials has been explored through computational methods,^{14,15} with several family members showing potential for exceptional electrochemical properties. These include an increase in the predicted lithium-ion storage capacity but, importantly, also include family members with predicted high lithium diffusion properties, a key challenge for producing fast charging batteries.

There remains a need for new CMPs having improved properties for use in battery applications.

The present invention was devised with the foregoing in mind.

### SUMMARY OF THE INVENTION

According to a first aspect of the present invention there is provided a material comprising: a repeating unit of structure A: 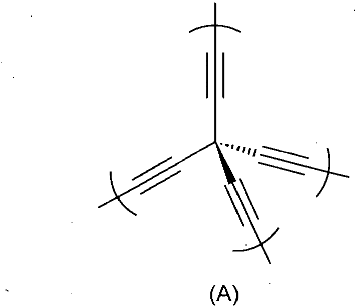 and
a plurality of end groups, each independently having a structure of formula I: 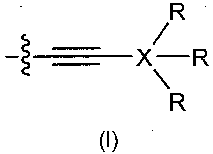
wherein

(i) X is C and each R is independently halo, tosylate, pseudohalide or a group of structure B: 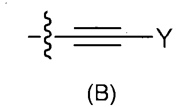 in which Y denotes a repeating unit of structure A, wherein at least one R is not a group of structure B;
   or
(ii) X is Si and each R is independently alkyl, alkenyl or aryl.

According to a second aspect of the present invention there is provided a process comprising the step of contacting, in an organic solvent, a strut precursor of formula II: 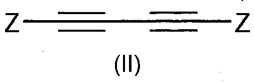 wherein each Z is a silyl group of formula -SiR¹₃, in which each R¹ is independently alkyl, alkenyl or aryl;
with
a compound, Q capable of removing both silyl groups from the strut precursor;
   and
a node precursor of formula III 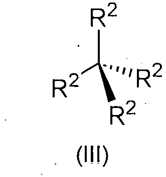
wherein each R² is independently halo, tosylate or pseudohalide.

According to a third aspect of the present invention there is provided a material obtainable, obtained or directly obtained by the process of the second aspect of the invention.

According to a fourth aspect of the present invention there is provided an electrode comprising the material of the first or third aspect of the invention.

According to a fifth aspect of the present invention there is provided a battery (e.g., a lithium ion battery) comprising the electrode of the fourth aspect of the invention.

### DETAILED DESCRIPTION OF THE INVENTION

The term "(m-nC)" or "(m-nC) group" used alone or as a prefix, refers to any group having m to n carbon atoms.

The term "alkyl" as used herein refers to straight or branched chain alkyl moieties, typically having 1, 2, 3, 4, 5 or 6 carbon atoms. This term includes reference to groups such as methyl, ethyl, propyl (n-propyl or isopropyl), butyl (n-butyl, sec-butyl or tert-butyl), pentyl, hexyl and the like. Most suitably, an alkyl may have 1, 2, 3 or 4 carbon atoms.

The term "alkenyl" as used herein refers to straight or branched chain alkenyl moieties, typically having 1, 2, 3, 4, 5 or 6 carbon atoms. The term includes reference to alkenyl moieties containing 1, 2 or 3 carbon-carbon double bonds (C=C). This term includes reference to groups such as ethenyl (vinyl), propenyl (allyl), butenyl, pentenyl and hexenyl, as well as both the *cis* and *trans* isomers thereof.

The term "alkynyl" as used herein refers to straight or branched chain alkynyl moieties, typically having 1, 2, 3, 4, 5 or 6 carbon atoms. The term includes reference to alkynyl moieties containing 1, 2 or 3 carbon-carbon triple bonds (C≡C). This term includes reference to groups such as ethynyl, propynyl, butynyl, pentynyl and hexynyl.

The term "aryl" or "aromatic" as used herein means an aromatic ring system comprising 6, 7, 8, 9 or 10 ring carbon atoms. Aryl is often phenyl but may be a polycyclic ring system, having two or more rings, at least one of which is aromatic. This term includes reference to groups such as phenyl, naphthyl and the like, of which phenyl is more common.

The term "halogen" or "halo" as used herein refers to F, Cl, Br or I. In a particular, halogen may be Br or Cl, of which Br is more common.

The term "pseudohalide" as used herein refers to univalent anionic group having a chemical resemblance to halides. Pseudohalides are weak Lewis bases carrying a formal -1 charge. Particular examples of pseudohalides include thiocyanate, cyanide, hydroxide, hydrosulfide and azide, of which thiocyanate is most common.

Throughout the entirety of the description and claims of this specification, where subject matter is described herein using the term "comprise" (or "comprises" or "comprising"), the same subject matter instead described using the term "consist of" (or "consists of" or "consisting of") or "consist essentially of" (or "consists essentially of" or "consisting essentially of") is also contemplated. For example, the material of the first aspect may consist essentially of, or consist of, the recited repeating unit and end groups.

Throughout the description and claims of this specification, the singular encompasses the plural unless the context otherwise requires. In particular, where the indefinite article is used, the specification is to be understood as contemplating plurality as well as singularity, unless the context requires otherwise.

Features described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any of the specific embodiments recited herein. The invention extends to any novel one, or any novel combination, of the features disclosed in this specification (including any accompanying claims, abstract and drawings), or to any novel one, or any novel combination, of the steps of any method or process so disclosed.

The term "about" when used in reference to numerical ranges, cut-offs, or specific values is used to indicate that the recited values may vary by up to as much as 10% from the listed value. As many of the numerical values used herein are experimentally determined, it should be understood by those skilled in the art that such determinations can, and often times will, vary among different experiments. The values used herein should not be considered unduly limiting by virtue of this inherent variation. Thus, the term "about" is used to encompass variations of ± 10% or less, variations of ± 5% or less, variations of ± 1% or less, variations of ± 0.5% or less, or variations of ± 0.1% or less from the specified value. Naturally, for numerical ranges, cut-offs and specific values expressed using the term "about", the numerical ranges, cut-offs and specific values themselves (i.e., without any variation) are also embraced.

### Materials of the invention

In a first aspect, the invention provides a material comprising:
a repeating unit of structure A: 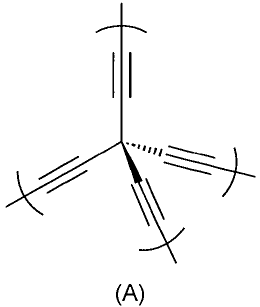 and
a plurality of end groups, each independently having a structure of formula I: 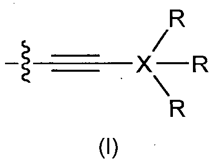
wherein
   (i) X is C and each R is independently halo, tosylate, pseudohalide or a group of structure B: 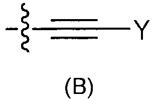 in which Y denotes a repeating unit of structure A, wherein at least one R is not a group of structure B;
      or
   (ii) X is Si and each R is independently alkyl, alkenyl or aryl.

Through rigorous investigation, the inventors have surprisingly found that the OSPC-1 material of the first aspect exhibits superior performance in battery studies when compared with OSPC-1 reported to be prepared via a six-step process¹⁰, in particular improved capacity retention at higher current density. Without wishing to be bound by theory, it is believed that the end groups of formula I, which are imparted by the process of the second aspect, give rise to advantageous surface properties, leading to improved electrochemical properties.

For the avoidance of doubt, it will be understood that the outermost acetylene carbon of the repeating unit of structure A (i.e., the carbon nearest the ")") is bound to either: (a) an outermost acetylene carbon of another repeating unit of structure A; or (b) an end group of structural formula I at a position denoted 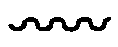 .

The following therefore depicts a 2-dimensional representation of a small section of the bulk structure of the material formed from repeating units of structure A:

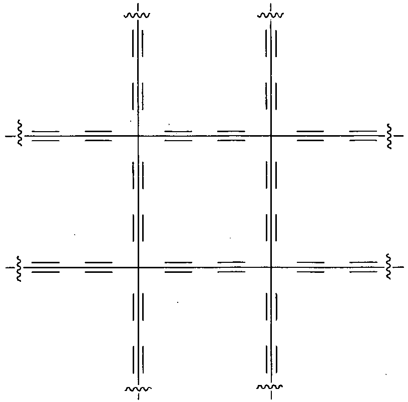

Considering the repeating nature of the bulk structure, the material may be regarded as a polymer. As discussed hereinbefore, this nomenclature has been adopted by the relevant scientific community for such materials.

It will be understood that the material may comprise end groups of type (i), end groups of type (ii), or a mixture of ends groups of type (i) and (ii).

For end groups of type (i), it will be understood that up to 2 of the R groups may be a group of structure B. In other words, part (but not all) of a type (i) end group may be regarded as a linker through to the bulk phase of the material, formed from a repeating unit of structure A.

Each end group may independently be such that:
(i) X is C and each R is independently halo or a group of structure B; or
(ii) X is Si and each R is independently selected from alkyl, alkenyl or aryl.

When X is Si, each R may independently be alkyl or aryl. Suitably, each R is independently (1-6C)alkyl or phenyl. More suitably, each R is independently (1-4C)alkyl or phenyl. Even more suitably, when X is Si, the end group is trimethylsilyl, triethylsilyl, tripropylsilyl, triisopropylsilyl, tributylsilyl, triisobutylsilyl, tert-butyldimethylsilyl or tert-butyldiphenylsilyl. Most suitably, when X is Si, the end group is trimethylsilyl (i.e., each R is methyl).

R is suitably halo.

When R is halo, it may be Cl or Br. Suitably, halo is Br.

Each end group may independently be such that:
(i) X is C and each R is independently Br or a group of structure B; or
(ii) trimethylsilyl.

The material may have a BET surface area of ≥500 m² g⁻¹, determined by N₂ gas sorption analysis at 77 K. Suitably, the material may have a BET surface area of 500 - 1200 m² g⁻¹. More suitably, the material may have a BET surface area of 600 - 1100 m² g⁻¹.

The material may have a total pore volume of ≥0.4 cm³ g⁻¹, determined by N₂ gas sorption analysis at 77 K. Suitably, the material has a total pore volume of 0.4 - 1.0 cm³ g⁻¹ determined by N₂ gas sorption analysis. More suitably, material has a total pore volume of 0.5 - 0.9 cm³ g⁻¹ determined by N₂ gas sorption analysis.

The material is porous. The nature of the porosity may be such that >80% (e.g., >90%) of the material's total pore volume is attributed to pores having a diameter of <10 nm, as determined by differential pore volume analysis by N₂ gas sorption. Suitably, the nature of the porosity may be such that >80% (e.g., >90%) of the material's total pore volume is attributed to pores having a diameter of <5 nm. The material may comprise pores <2 nm in diameter. The material may therefore be regarded as microporous. Considering the conjugation present within the material's structure, it be regarded as a conjugated microporous polymer.

### Processes of the invention

In a second aspect, the invention provides a process comprising the step of contacting, in an organic solvent, a strut precursor of formula II: 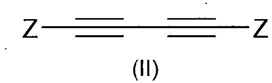
wherein each Z is a silyl group of formula -SiR¹₃, in which each R¹ is independently alkyl, alkenyl or aryl;
   with
a compound, Q capable of removing both silyl groups from the strut precursor;
   and
a node precursor of formula III 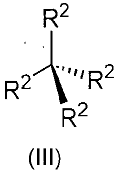
wherein each R² is independently halo, tosylate or pseudohalide.

The inventors have surprisingly determined that the process of the second aspect, which can be conducted in a *one-pot* manner, affords an OSPC-1 material exhibiting superior performance in battery studies when compared with OSPC-1 reported to be prepared via the six-step process¹², in particular improved capacity retention at higher current density. The process of the second aspect involves a single synthetic step, thereby presenting clear industrial advantages over the established, six-step technique for preparing OSPC-1.

The process may be used for preparing the material of the first aspect.

The compound, Q, may be a catalyst.

The compound, Q, or part thereof, may be capable of forming a bond to the removed silyl group.

The compound, Q, may be a source of fluoride ions. Particular, non-limiting examples of Q include caesium fluoride, hydrogen fluoride, tetrabutylammonium fluoroborate, ammonium bifluoride, sodium fluoride, potassium fluoride and lithium fluoride. Suitably, the compound, Q, is caesium fluoride.

Within the strut precursor, each R¹ may independently be alkyl or aryl. Suitably, each R¹ is independently (1-6C)alkyl or phenyl. More suitably, each R¹ is independently (1-4C)alkyl or phenyl. Even more suitably, silyl group is the strut precursor is trimethylsilyl, triethylsilyl, tripropylsilyl, triisopropylsilyl, tributylsilyl, triisobutylsilyl, tert-butyldimethylsilyl or tert-butyldiphenylsilyl. Most suitably, silyl group is the strut precursor is trimethylsilyl (i.e., each R' is methyl).

R² is suitably halo.

When R² is halo, it may be Cl or Br. Suitably, halo is Br.

In some instances, R¹ is methyl, R² is halo and the compound, Q, is caesium fluoride.

The organic solvent may be diphenylsulfone, mesitylene, 1,2-dichlorobenzene, N-methyl-2-pyrrolidine, diglyme or a mixture of two or more thereof. Suitably, the organic solvent is diphenylsulfone.

In a third aspect, the invention provides a material obtainable, obtained or directly obtained by the process of the second aspect. It will be understood that the material of the third aspect may have any one or more of those properties outlined hereinbefore in relation to the first aspect.

### Electrodes and batteries of the invention

In a fourth aspect, the invention provides an electrode (e.g., an anode) comprising the material of the first or third aspect of the invention.

In a fifth aspect of the present invention there is provided a battery (e.g., a lithium ion battery) comprising the electrode of the fourth aspect of the invention.

As described hereinbefore, the OSPC-1 materials of the first and third aspects exhibit superior performance in battery studies when compared with OSPC-1 reported to be prepared via the six-step process¹⁰, in particular improved capacity retention at higher current density.

The following numbered statements 1 to 33 are not claims, but instead describe particular aspects and embodiments of the invention:
1. A material comprising:
   a repeating unit of structure A: 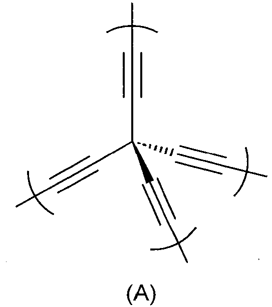 and
   a plurality of end groups, each independently having a structure of formula I: 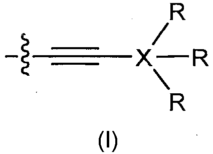
   wherein
      (i) X is C and each R is independently halo, tosylate, pseudohalide or a group of structure B: 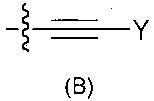 in which Y denotes a repeating unit of structure A, wherein at least one R is not a group of structure B;
         and/or
   (ii) X is Si and each R is independently alkyl, alkenyl or aryl.
2. The material as defined in statement 1, wherein
   (i) X is C and each R is independently halo or a group of structure B: 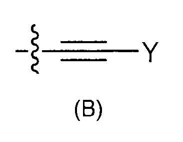 in which Y denotes a repeating unit of structure A, wherein at least one R is not a group of structure B;
      and/or
   (ii) X is Si and each R is independently selected from alkyl, alkenyl or aryl.
3. The material as defined in statement 1 or 2, wherein when X is Si, each R is independently alkyl or aryl.
4. The material as defined in statement 3, wherein each R is independently (1-6C)alkyl or phenyl.
5. The material as defined in statement 3, wherein each R is independently (1-4C)alkyl or phenyl.
6. The material as defined in statement 3, wherein the end group is trimethylsilyl, triethylsilyl, tripropylsilyl, triisopropylsilyl, tributylsilyl, triisobutylsilyl, tert-butyldimethylsilyl or tert-butyldiphenylsilyl.
7. The material as defined in statement 3, wherein the end group is trimethylsilyl (i.e., each R is methyl).
8. The material as defined in any one of the preceding statements, wherein halo is Br or Cl.
9. The material as defined in statement 8, wherein halo is Br.
10. The material as defined in any one of the preceding statements, wherein the material has a BET surface area of ≥500 m² g⁻¹ determined by N₂ gas sorption analysis.
11. The material as defined in any one of the preceding statements, wherein the material has a BET surface area of 500 - 1200 m² g⁻¹ determined by N₂ gas sorption analysis.
12. The material as defined in any one of the preceding statements, wherein the material has a total pore volume of ≥0.5 cm³ g⁻¹ determined by N₂ gas sorption analysis.
13. The material as defined in any one of the preceding statements, wherein the material has a total pore volume of 0.5 - 1.0 cm³ g⁻¹ determined by N₂ gas sorption analysis.
14. The material as defined in any one of the preceding statements, wherein the material comprises pores of <2 nm in diameter.
15. A process comprising the step of contacting, in an organic solvent, a strut precursor of formula II: 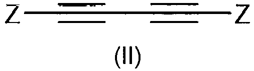
   wherein each Z is a silyl group of formula -SiR¹₃, in which each R¹ is independently alkyl, alkenyl or aryl;
      with
   a compound, Q capable of removing both silyl groups from the strut precursor;
      and
   a node precursor of formula III 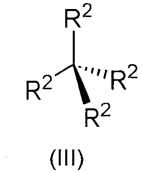
   wherein each R² is independently halo, tosylate or pseudohalide.
16. The process as defined in statement 15, wherein the compound, Q is a catalyst.
17. The process as defined in statement 15 or 16, wherein the compound, Q, or part thereof, is capable of forming a bond to the removed silyl group.
18. The process as defined in statement 15 or 16, wherein the compound, Q is a source of fluoride ions.
19. The process as defined in statement 15 or 16, wherein the compound, Q is caesium fluoride, hydrogen fluoride, tetrabutylammonium fluoroborate, ammonium bifluoride, sodium fluoride, potassium fluoride or lithium fluoride.
20. The process as defined in statement 15 or 16, wherein the compound, Q is caesium fluoride.
21. The process as defined in any one of statements 15 to 20, wherein each R¹ is independently alkyl or aryl.
22. The process as defined in any one of statements 15 to 20, wherein each R¹ is independently (1-6C)alkyl or phenyl.
23. The process as defined in any one of statements 15 to 20, wherein each R¹ is independently (1-4C)alkyl or phenyl.
24. The process as defined in any one of statements 15 to 20, wherein the silyl group is trimethylsilyl, triethylsilyl, tripropylsilyl, triisopropylsilyl, tributylsilyl, triisobutylsilyl, tert-butyldimethylsilyl or tert-butyldiphenylsilyl.
25. The process as defined in any one of statements 15 to 20, wherein the silyl group is trimethylsilyl.
26. The process as defined in any one of statements 15 to 25, wherein each R² is independently halo.
27. The process as defined in statement 26, wherein halo is Br or Cl.
28. The process as defined in statement 26, wherein halo is Br.
29. The process as defined in any one of statements 15 to 28, wherein the organic solvent is diphenylsulfone, mesitylene, 1,2-dichlorobenzene, N-methyl-2-pyrrolidine, diglyme or a mixture of two or more thereof.
30. The process as defined in any one of statements 15 to 28, wherein the organic solvent is diphenylsulfone.
31. A material obtainable, obtained or directly obtained by the process as defined in any one of statements 15 to 30.
32. An electrode comprising the material as defined in any one of statements 1 to 14 or 31.
33. A battery comprising the electrode as defined in statement 32.

### EXAMPLES

One or more examples of the invention will now be described, for the purpose of illustration only, with reference to the accompanying figures:
Fig. 1. (a) The chemical repeat structure of organically synthesised porous carbon (OSPC) polymer materials, OSPC-0 and OSPC-1, and acetylene and diacetylene struts respectively used in each case. (b) How OSPCs fit in to the family of microporous organic polymer materials.
Fig. 2. (a) Schematic of the multi-step Method A to make OSPC-1a, and the one-pot Method B to produce OSPC-1b and (b) the reaction scheme for Method B for OSPC-1.
Fig. 3. Characterisation data of OSPC-0b (left) and OSPC-1b (right). (a) Fitted C 1s XPS spectra. The peak at 284.7 eV is assigned to sp3 carbon, the peak at 285.2 eV is assigned to sp carbon, and the peak at 286.7 eV is assigned to carbon bonded to bromine end groups. (b) Solid-state 13C NMR spectra with peaks as labelled, non-labelled peaks are spinning sidebands as confirmed by analysis at a higher spinning speed and (c) Raman spectra.
Fig. 4. Example wide XPS spectra of OSPC-1b (a) and OSPC-0b (b).
Fig. 5. Solid state NMR spectra of OSPC-1b (top) and OSPC-0b (bottom) obtained at a high MAS speed of 25 kHz (compared to 16 kHz used to obtain the NMR spectra shown in Figure 3 (b)). In order to increase the spinning speed a smaller mass of sample had to be used with a lower resolution spectrometer.
Fig. 6. Raman spectra of OSPC-1b (a - focused, b - wide) and OSPC-0b (c - focused, d - wide).
Fig. 7. SEM images of OSPC-1b (a, b, c) and OSPC-0b (d, e, f).
Fig. 8. Initial N₂ adsorption isotherm of OSPC-1b (a) and OSPC-0b (b) at 77 K.
Fig. 9. Repeat N₂ adsorption isotherm of OSPC-1b (a) and OSPC-0b (b) at 77 K.
Fig. 10. Cumulative and Differential pore volume plots of OSPC-0b (a) and OSPC-1b (b) at 77 K.
Fig. 11. Galvanostatic charge/discharge cycling of (a) OSPC-1b and (b) OSPC-0b for in the voltage window of 0-2 V and using a current density of 200 mA g-1. The first discharge is omitted for clarity. Cyclic voltammetry data for OSPC-1b (c) and OSPC-0b (d) between 0 - 3 V scanning at 1 mV s-1.

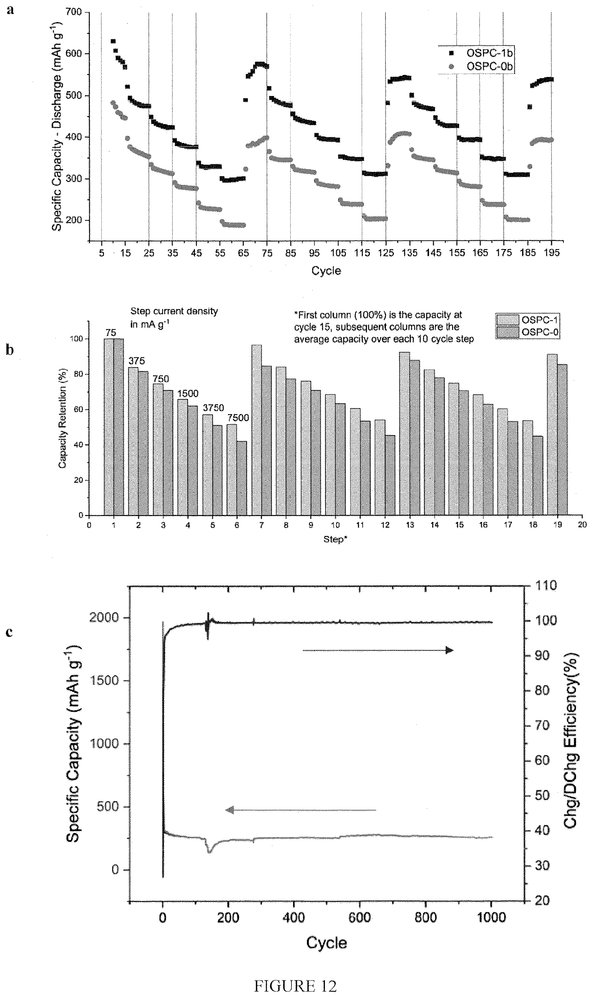

Fig. 12. (a) Discharge capacity of OSPC-1b (black) and OSPC-0b (red) during rate capability test. The cells were cycled 15 times at 75 mA g-1 for an initial conditioning and then three times through a waterfall pattern of 10 cycles at 375, 750, 1500, 3750, 7500, and 75 mA g⁻¹. (b) The capacity retention of OSPC-1b (orange) and OSPC-0b (green), relative to their initial capacity across the waterfall pattern on 75, 375, 750, 1500, 3750, 7500 and 75 mA g⁻¹. (c) Long-term cycling performance of an OSPC-1b cell showing discharge capacity in the 0-2 V voltage window vs. Li+/Li at a current density of 200 mA g⁻¹ over cycles 2 to 1000.
Fig. 13. SEM images of OSPC-1b and graphite after over discharging at 5000 mAh g⁻¹ for 6 minutes.
Fig. 14. SEM images of a pristine graphite electrode (a) and a pristine OSPC-1b electrode (b).
Fig. 15. Cycling data for OSPC-1b (a) and graphite (b) electrodes from the stress test cycling pattern of 1000 cycles at 5000 mA g⁻¹.
Fig. 16. XRD patterns of the aluminium sample holder (green) and copper current collector (red) with a simulated XRD pattern of metallic lithium (yellow). These were used to assign the subsequent patterns, with the coloured asterisks referring to these materials.
Fig. 17. XRD patterns of a pristine OSPC-1b electrode (top) and a stress-tested electrode (bottom). As OSPC-1b is amorphous it cannot be observed by XRD, but degradation of OSPC-1b and or the carbon black into graphite and graphite like structures is observed (black asterisks).²³

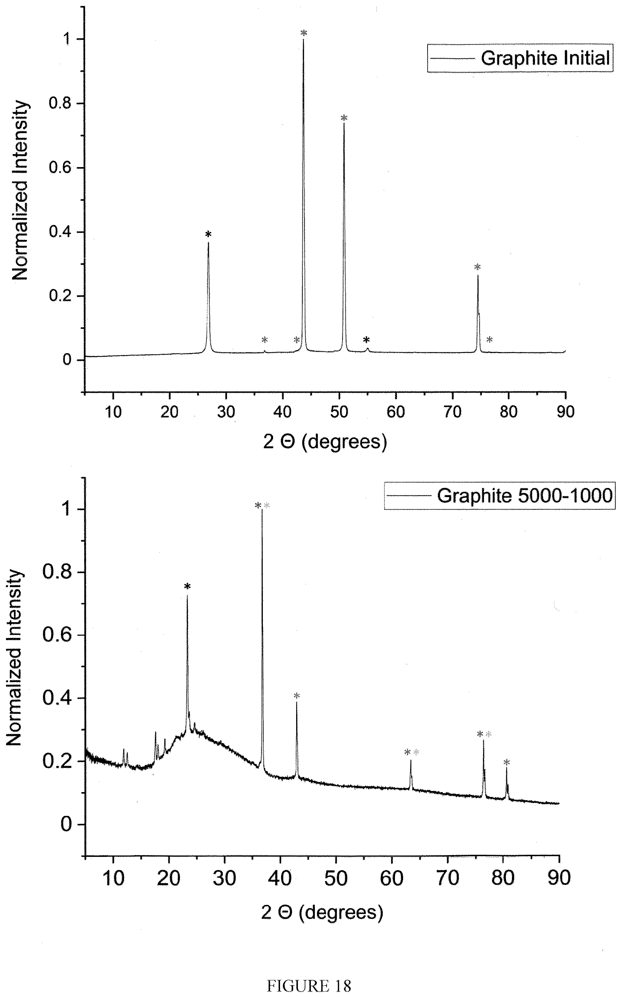

Fig. 18. XRD patterns of a pristine graphite electrode (top) and a stress tested electrode (bottom). In the pristine electrode graphite peaks are visible at 27° and 65° 2θ. In the stress tested electrode, the copper current collector detached from the electrode during cell disassembly so is not observed. The aluminium sample holder has similarly positioned peaks to the calculated metallic Li spectra. Distortion of the graphite peak at 27° 2θ is attributed to disruption of the graphite lattice structure from the intercalated lithium and the effect of repeated intercalation and deintercalation of lithium from the stress test's conditions.²⁴

### 1. Methods and materials

**X-ray photoelectron spectroscopy (XPS):** XPS analysis was performed on a Kratos Analytical Axis Supra using a monochromated Al Kα source, which investigated the wide spectrum, the C 1s region and the O 1s region. Six sites were analysed on each sample, one site on the OSPC-1b sample showed evidence of decomposition and was not included in the analysis. Data analysis and peak fitting was performed on CasaXPS.

**Solid state NMR:** Solid state NMR (ssNMR) was performed on a Bruker AVANCE **III** HD 700Wb using a 3.2 mm probe. The results were obtained through the Hahn echo direct excitation of ¹³C. The MAS frequency was 16 kHz and the D1 was 300s for OSPC-1b and 60s for OSPC-0b. Additional ssNMR was performed on a Bruker AVANCE III HD 400Wb using a 2.6 mm probe. The results were obtained through the Hahn echo direct excitation of ¹³C. The MAS frequency was 25 kHz and the D1 was 60s.

**Raman analysis:** Raman spectra were obtained using the Raman InVia System (Renishaw plc, Wooton-Under edge U.K.) with a 532 nm laser with a power of 15mW.
OSPC-0b: Six individual static spectra centred at 1200 cm⁻¹ were obtained using an exposure time of 2 seconds at 100% laser power for 10 accumulations. An additional extended spectrum was obtained using a 10 second exposure time at 100% laser power for 1 accumulation.
OSPC-1b: Six individual static spectra centred at 1200 cm⁻¹ were obtained using an exposure time of 2 seconds at 1% laser power for 10 accumulations. An additional extended spectrum was obtained using a 10 second exposure time at 1% laser power for 1 accumulation.

**Scanning electron microscopy (SEM) and energy dispersive X-ray spectroscopy (EDX):** SEM and EDX were performed on a JEOL JSM-7800F fitted with a X-Max50, large area 50 mm² Silicon Drift Detector (SDD) from Oxford Instruments. Images were captured at between 100x and 30000x magnification at 2.00 kV acceleration. Powders were dropped onto carbon tabs ((G3348N, Agar Scientific) for this measurement.

**Surface area analysis:** Polymer surface areas and pore size distributions were measured by nitrogen adsorption and desorption at 77.4 K using a Micrometrics 3-Flex adsorption analyser over a relative pressure range (P / P₀) of 0.01 to 0.25. Before the analysis, the materials were outgassed under a primary vacuum at 100 °C for 24 hours.

**Electrochemical performance in Li-ion batteries:** The electrochemical performance of the studied materials was evaluated using stainless steel CR2032 coin cells (Tob New Energy) with Li metal as the reference and counter electrode, 1M LiPF₆ in EC/DMC (1:1 w/w%) as the electrolyte, and a 17 mm Whatman micro class fibre separator.

Assembly was performed in an argon filled glovebox (MBraun) with O₂ and H₂O ≤ 0.1 ppm, where the active material was mixed with carbon black (Super P) (99 % Alfa Aesar) and polyvinylidene binder (PVDF Kynar, 99 % Alfa Aesar) in a ratio of 5:4:1 at loadings of circa 0.5 mg cm⁻².

The mixture was cast onto copper foil (99.98%, 12 µm, Tob New Energy) acting as current collector, punched into 0.785 mm² electrodes, and pressed under 5 tonnes with a hydraulic press. Galvanostatic charge/discharge measurements were performed on Neware battery cycler under the stated conditions.

Cyclic voltammetry (CV) was carried out in the voltage window 0-3 vs. Li⁺/Li at a scan rate of 10 mV s⁻¹ performed on a potentiostat (VMP300, Biologic).

Over discharge experiments were performed by discharging the OSPC-1b and graphite cells from their respective open circuit voltages to 0.005V at 20 mA g⁻¹ and then held at a discharge current of 5000 mA g⁻¹ for 6 minutes with no lower voltage window. The cells were then disassembled and mounted on SEM stubs without washing. This preserved any dendrites on the surface but resulted in residual separator fibres visible on the SEM images.

The stress test cycling pattern consisted of 1000 cycles at 5000 mA g⁻¹. The cells were then disassembled and transferred under inert conditions to a separate glovebox containing the XRD machine. The samples were prepared on the aluminium sample holder under an inert atmosphere.

**X-ray Diffraction:** Powder X-ray diffraction (XRD) data were collected on a Rigaku MiniFlex600 at room temperature in Bragg-Brentano geometry with a 0.6 kW Cu-source generator (K_{α} = 1.5406 Å) and a D/teX Ultra detector. The powdered samples were packed on a flat circular glass holder and scanned from 5° to 90° 2θ.

### 2. Synthetic procedures

### 2.1. General procedure 1: One pot ("Method B") synthesis of OSPC-1b

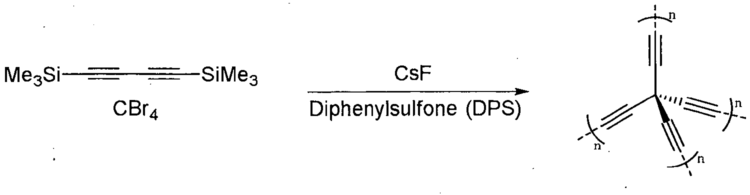

Bis(trimethylsilyl)diacetylene (0.40 g, 2 mmol), carbon tetrabromide (0.32 g, 1 mmol), CsF (0.75 g, 5 mmol) and diphenyl sulfone (5 g) were added to a 20-mL microwave vial. The microwave vial was capped, and the mixture was heated at 250 °C overnight. Then, the rection mixture was cooled to 150 °C and dichlorobenzene (5 mL) was added. The black precipitate was filtered out and was suspended in NaOH aq. solution (50 mL, 2M) overnight. The black solid was then collected by filtration and rinsed with H₂O (25 mL). The resultant solid underwent further purification using Soxhlet extraction with methanol overnight and the product was then dried under high vacuum overnight to give OSPC-1b as a black powder (100 - 150 mg).

### 2.2. General procedure 2: Large scale, one pot ("Method B") synthesis of OSPC-1b

Bis(trimethylsilyl)diacetylene (3.11 g, 16 mmol), carbon tetrabromide (2.64 g, 8 mmol), CsF (6 g, 40 mmol) and diphenyl sulfone (20 g) were added to a 100-mL stainless steel reactor with a PTFE insert that had been heated to 150 °C. The reactor was sealed and heated to 200 °C overnight and then allowed to cool to room temperature. Acetone (approx. 100 mL) was added to loosen the crude product and the black precipitate was filtered out. The resultant solid underwent further purification using Soxhlet extraction with methanol overnight and the product was then dried under vacuum overnight to give OSPC-1b as a black powder. (1.9 g).

### 2.3. General Procedure 3: One pot ("Method B") synthesis of OSPC-0b

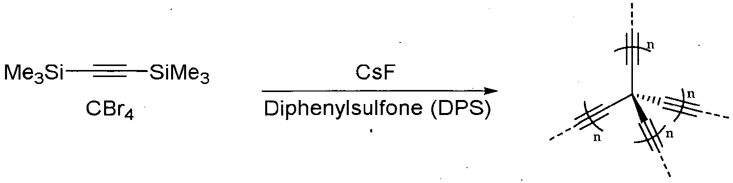

Bis(trimethylsilyl)acetylene (0.34 g, 2 mmol), carbon tetrabromide (0.33 g, 1 mmol) and CsF (0.75 g, 5 mmol) and diphenyl sulfone (2.5 g) were added to a 20-mL microwave vial. The microwave vial was capped, and the mixture was heated at 250 °C overnight. Then, the rection mixture was cooled to 150 °C and dichlorobenzene (5 mL) was added. The black precipitate was filtered out and was suspended in NaOH aq. solution (50 mL, 2M) overnight. The black solid was then collected by filtration and rinsed with H₂O (25 mL). The resultant solid underwent further purification using Soxhlet extraction with methanol overnight and the product was then dried under high vacuum overnight to give OSPC-0b as a black powder (50 - 100 mg).

### 2.4. Six-step ("Method A") synthetic route for OSPC-1a

The following reaction scheme illustrates the established, six-step process for preparing OSPC-1,¹⁰ resulting in a material termed herein OSPC-1a.

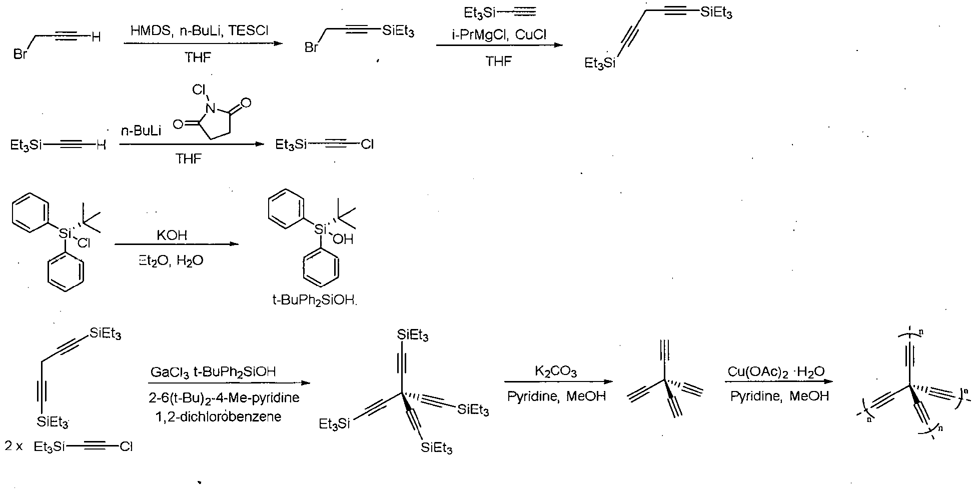

### 3. Results

### 3.1. Structural properties

OSPC-1 has been synthesized here according to Method B (Figure 2); a one pot synthesis, outlined above, and purified using standard methods. The resulting material is termed OSPC-1b. Although this material shares the same short-range node-strut structure as OSPC-1 prepared by the six-step synthesis¹⁰ (termed OSPC-1a), given the different polymerization methods used, the respective networks grow through different pathways and have different terminating end groups. OSPC-1a, made by joining pre-saturated nodes together, is terminated with hydrogen end groups, whereas OSPC-1b, made by attaching nodes to struts one by one, is terminated with a mixture of bromine atoms, and silyl groups. This difference appears to influence the resulting electrochemical properties.

To assess the influence of the solvent on Method B, diphenyl sulfone (DPS) and a range of alternate solvents were considered, shown in Table 1. DPS is solid below 128°C posing some difficulties during extraction and purification of the product. However, all alternative solvents tried had lower boiling points, which could be responsible for the lower yields observed when compared to DPS under otherwise identical conditions. It was concluded that DPS was optimal, and so was used in the synthesis of all OSPC samples described here.

**Table 1: Solvent screening for the synthesis of OSPC-0b according to general procedure 3 (reactions ran at 150 °C instead of 250 °C).**

| **Solvent** | **Mass of OSPC-0b obtained** |
|---|---|
| Mesitylene | 9.7 mg |
| 1,2-Dichlorobenzene | 14.3 mg |
| NMP | 12.6 mg |
| Diglyme | 12.9 mg |
| DPS | 34.4 mg |

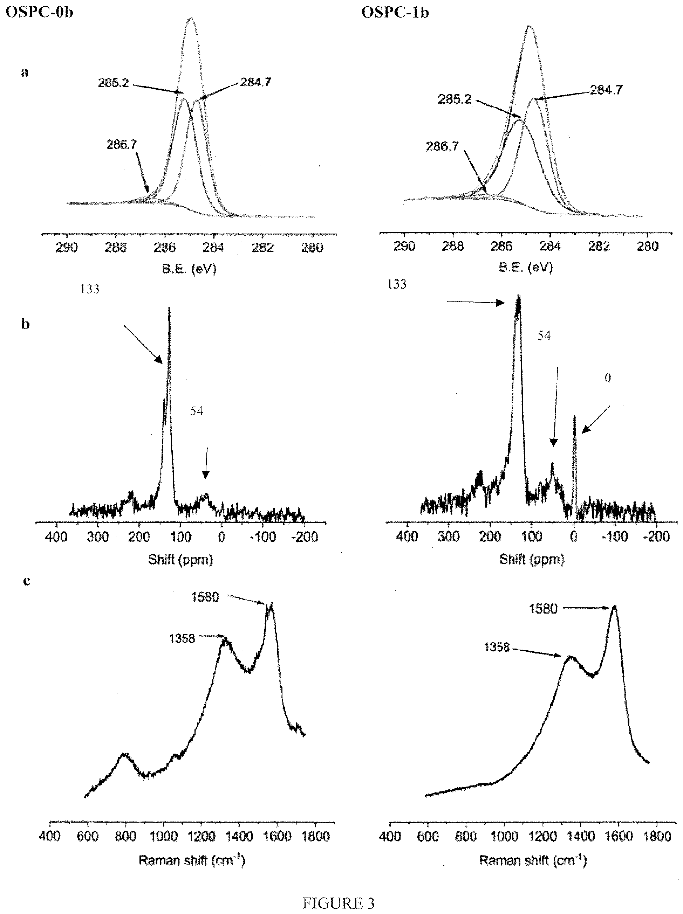

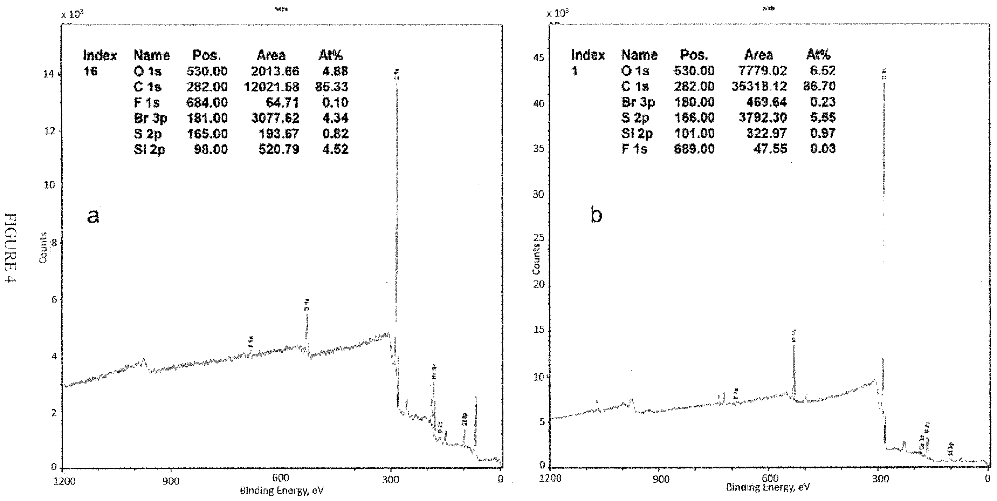

X-ray photoelectron spectroscopy (XPS) analysis was used for OSPC-1a to confirm the presence of only sp and *sp³* hybridized carbon atoms within the structure. XPS was undertaken here on the OSPC-0b and OSPC-1 b samples. Six spectra were obtained for OSPC-1 b and five spectra were obtained for OSPC-0b. The C 1s spectra were fitted, with the sub peaks around 284.6 eV assigned to C-C *sp³*, those around 285.2 assigned to C-C sp, and the peak around 286.7 assigned to C-Br in accordance with previously reported data.²⁵ The wide spectra were fitted to the appropriate elemental peaks with the reports. A summary of the results is presented in Figure 3 (a), with more detailed information provided in Tables 2-5 and Figure 4.

**Table 2: Carbon environment abundance data for OSPC-1b spectra in Figure 4a.**

| Spectra | a | b | c | d | e | *x* | *σ* |
|---|---|---|---|---|---|---|---|
| C-C *sp³* (%) | 47.43 | 46.89 | 45.42 | 62.20 | 69.41 | 51.786 | 13.94 |
| C-C *sp* (%) | 49.94 | 50.68 | 51.18 | 33.11 | 26.74 | 55.566 | 14.32 |
| C-Br *sp* (%) | 2.62 | 2.44 | 3.4 | 3.85 | 3.85 | 3.648 | 0.75 |

**Table 3: Carbon environment abundance data for OSPC-0b spectra in Figure 4b.**

| Spectra | a | b | c | d | e | f | *x* | *σ* |
|---|---|---|---|---|---|---|---|---|
| C-C *sp³* (%) | 65.05 | 46.89 | 60.08 | 55.56 | 49.78 | 54.20 | 55.26 | 6.63 |
| C-C *sp* (%) | 33.42 | 50.68 | 38.52 | 42.39 | 47.77 | 44.91 | 42.95 | 6.28 |
| C-Br *sp* (%) | 1.53 | 2.44 | 1.39 | 2.05 | 2.45 | 0.89 | 1.79 | 0.62 |

**Table 4: Wide spectrum XPS data for OSPC-1b.**

| Element\Spectra | a | b | c | d | e | *x* | *σ* |
|---|---|---|---|---|---|---|---|
| O (%) | 3.50 | 4.66 | 3.47 | 3.66 | 4.88 | 4.03 | 0.68 |
| C (%) | 86.19 | 84.94 | 85.80 | 85.73 | 85.33 | 85.60 | 0.48 |
| F (%) | 0.57 | 0.25 | 0.33 | 0.52 | 0.10 | 0.35 | 0.19 |
| Br (%) | 4.59 | 4.81 | 4.79 | 4.86 | 4.34 | 4.68 | 0.26 |
| S (%) | 0.76 | 0.77 | 0.81 | 0.94 | 0.82 | 0.82 | 0.07 |
| Si (%) | 4.38 | 4.56 | 4.8 | 4.29 | 4.52 | 4.51 | 0.20 |

**Table 5: Wide spectrum XPS data for OSPC-0b.**

| Element\Spectra | a | b | c | d | e | f | *x* | *σ* |
|---|---|---|---|---|---|---|---|---|
| O (%) | 6.52 | 6.11 | 5.89 | 5.45 | 6.72 | 6.31 | 6.16 | 0.42 |
| C (%) | 86.73 | 87.32 | 87.84 | 88.19 | 87.33 | 87.23 | 87.44 | 0.51 |
| F (%) | 0 | 0 | 0.15 | 0.11 | 0 | 0 | 0.04 | 0.06 |
| Br (%) | 0.23 | 0.11 | 0.03 | 0.07 | 0.19 | 0.11 | 0.12 | 0.07 |
| S (%) | 5.55 | 6.13 | 5.82 | 6.17 | 5.76 | 6.21 | 5.94 | 0.27 |
| Si (%) | 0.97 | 0.34 | 0.26 | 0 | 0.01 | 0.14 | 0.29 | 0.36 |

The C1s peak at 285 eV was common to all spectra and was deconvoluted into three sub-peaks. In accordance with previously reported data, the peak at ≈284.7 eV was assigned to a carbon node with *sp³* hybridization, the peak at ≈285.2 eV is assigned to a carbon strut with sp hybridization, and the peak at ≈286.7 eV is assigned to carbon bonded to the Br end groups. As previously observed with OSPC-1a, the differences between the observed and expected ratios of C *sp³* and C *sp* can be explained by the elevated abundance of end groups and greater exposure at the material's surface. A survey XPS spectra was collected for OSPC-0b and OSPC-1b, which reported elemental abundance percentages in line with expectation (Tables 4 & 5).

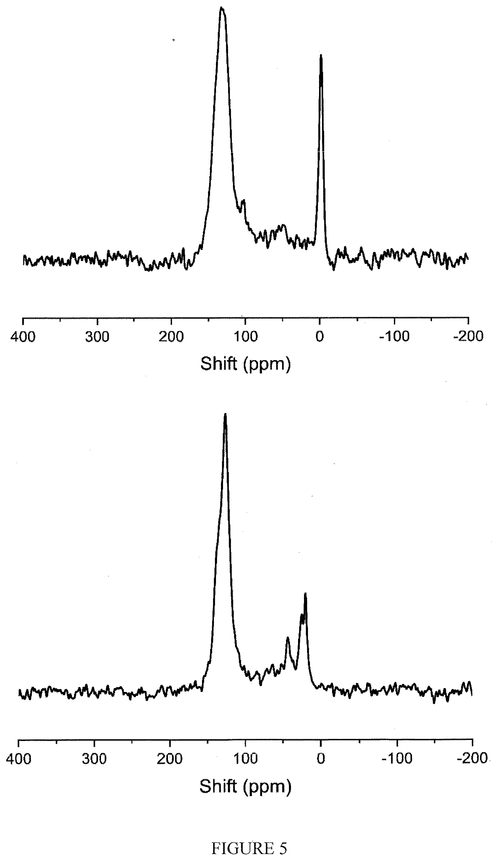

ssNMR of OSPC-0b and OSPC-1b are shown in Figure 3 (b). For OSPC-0b, a split peak was observed at ca.133 ppm which was attribute to the acetylene C sp struts. The splitting is due to the acetylene strut within the bulk of the polymer network being more shielded, while the acetylene C sp struts at or near the polymer network's surface are less shielded. The peak at 54 ppm was assigned to the C *sp³* nodes. Similarly, for OSPC-1b, the peak at 133 ppm was assigned to acetylene C sp struts and the peak at 54 ppm is assigned to the C *sp³* nodes. The peak at 0 ppm is assigned to residual trimethylsilyl protecting groups from the monomer, as suggested by the XPS wide data (Figure 5).

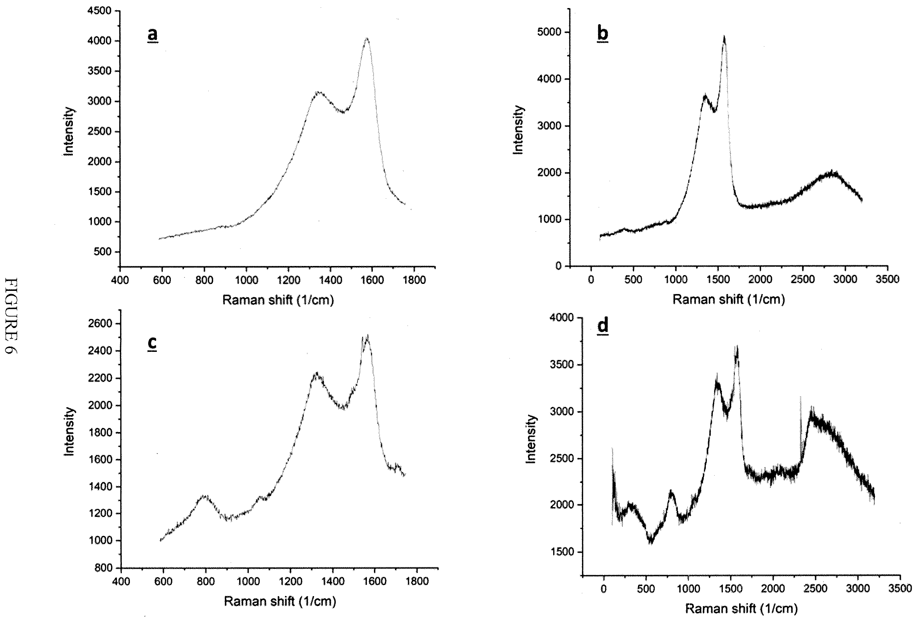

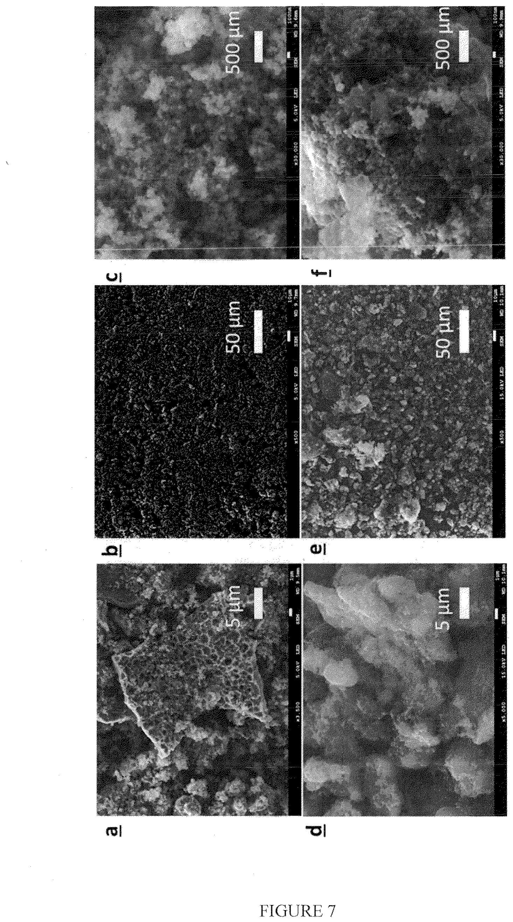

Raman spectroscopy data of OSPC-0b and OSPC-1b in the 600-1800 cm-1 range are shown in Figure 3 (c) and wide range data is found in Figure 6. Both materials showed two distinct peaks at 1358 cm⁻¹ and 1580 cm⁻¹, assigned to C sp stretching, similarly to those observed in OSPC-1a,¹⁰ further corroborating the XPS data. Although peaks appear at similar locations to the D and G peaks reported in graphite and graphitic materials, it is not appropriate to assign them as such as they originate from different Raman interactions.^{16,17} OSPC-0 has an additional peak at 800 cm⁻¹ which was attributed to *sp³-sp* stretching at the node centres. Scanning Electron Microscopy (SEM) images of OSPC-0b and OSPC-1b showed similar microstructural properties to those materials previously published and are shown in Figure 7,¹⁰

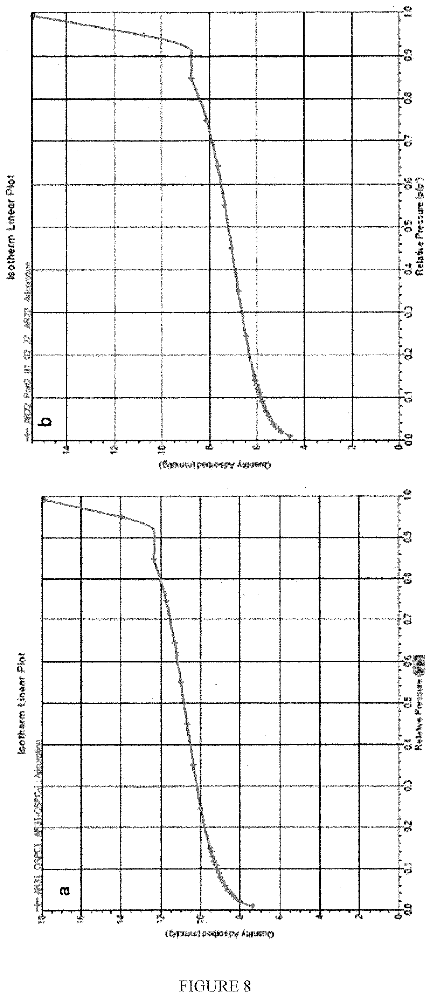

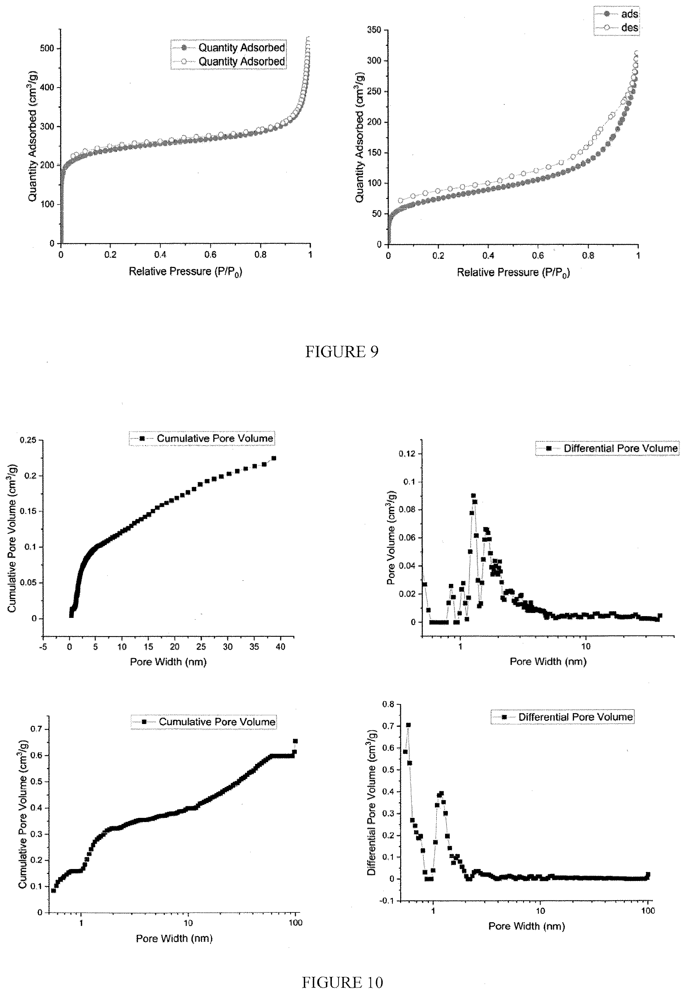

The nitrogen uptake isotherms were collected for two samples of both OSPC-0b and OSPC-1b and are type II/IV in appearance, shown in Figures 8-10 and Table 6.

**Table 6: Surface area data for OSPC-1 and OSPC-0 from the initial and repeat readings obtained at 77 K.**

| All units in m²g⁻¹ | OSPC-0 Initial | OSPC-0 Repeat | OSPC-1 Initial | OSPC-1 Repeat |
|---|---|---|---|---|
| BET Surface Area: | 473 | 261 | 726 | 909 |
| Langmuir Surface Area: | 901 | 429 | 1380 | 1593 |
| t-Plot Micropore Area: | 244 | 65.7 | 430 | 617 |
| t-Plot external surface area: | 230 | 204.3 | 296 | 292 |
| BJH Adsorption cumulative surface area of pores | 164 | 170 | 198 | 200 |
| BJH Desorption cumulative surface area of pores | N/A | 155 | N/A | 151 |
| D-H Adsorption cumulative surface area of pores | 148 | 168 | 178 | 197 |
| D-H Desorption cumulative surface area of pores | N/A | 151 | NA | 145 |

**.** Analysis of the nitrogen uptake isotherm for OSPC-1b using the BET equation gave surface areas of 726 m² g⁻¹ and 909 m² g⁻¹, similar to that reported for OSPC-1a (766 m² g⁻¹). For OSPC-0b, analysis of the nitrogen uptake isotherm using the BET equation reported surface areas of 261 m² g⁻¹ and 473 m² g⁻¹, in agreement to the value predicted through computational simulation.^{14,15}

### 3.2. Electrochemical properties

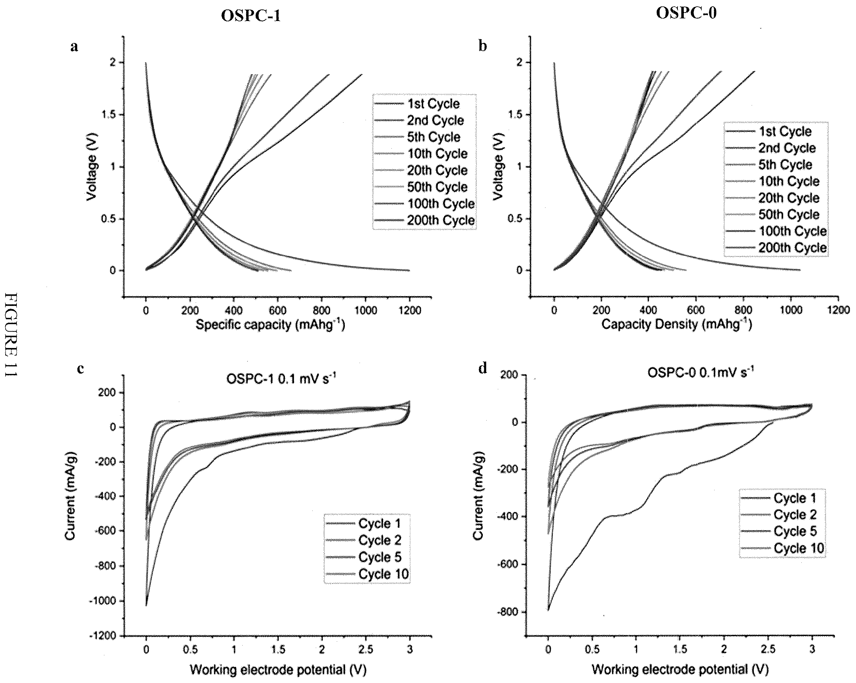

Galvanostatic charge/discharge (GCD) cycling in the 0-2 V voltage window at 200 mA g⁻¹ of OSPC-1b and OSPC-0b anodes are shown in Figure 11(a) and (b) respectively. Large initial discharge capacities of 4000 mAh g⁻¹ and 3500 mAh g⁻¹, attributed to solid electrolyte interphase (SEI) formation, were observed for both materials.¹⁰ The observed irreversible initial capacities corroborate the larger currents with respect to the subsequent cycles observed in the CV data, shown in Figure 11(c) (OSPC-1b) and (d) (OSPC-0b). After the first charge, the voltage profiles of OSPC-1b and OSPC-0b showed reversible slopes upon cycling. One should note, however, the presence of two cathodic peaks at 1 V and 1.5 V in the first sweep for OSPC-0b, which shifted to 0.7 V and 1.7 V respectively, and are not reversible in subsequent cycles. This could explain the lower capacity observed in OSPC-0b compared to OSPC-1b and might be attributed to reactions between Li and terminal groups, for example, in OSPC-0b.

The load curves and CV data are similar to those reported for OSPC-1a, suggesting that OSPC-1b and OSPC-0b store energy through electrochemically and geometrically non-equivalent Li sites over a spectrum of interaction energies.^{10,18-20} The typical plateau associated with lithium intercalation in graphite and corresponding redox peaks were not observed, so Li insertion must take place through an alternative mechanism.²⁰ This was established computationally for OSPC-1a and the same mechanism was assigned to OSPC-1b and 0b.^{10,14,15} After 200 cycles, the discharge capacities for OSPC-1b and OSPC-0b were 502 mAh g⁻¹ and 440 mAh g⁻¹, respectively.

These differences were attributed to the different polymerization route used in the one-pot synthesis compared to the six-step synthesis reported, as well as the narrower voltage window used in this work. As the different polymerization route results in different end groups that contain bromine and trimethyl silicon, which will be most prominent at the edges of the network, the surface chemistry could be altered, affecting the SEI composition.

Achieving high energy densities under a range of charging conditions is an important aspect of the lifetime for commercial batteries. Capacity fade due to structural degradation while fast charging as well as the ability to fast charge as a battery are prominent issues for commercial LIBs.

To assess the fast-charging performance of the OSPC systems, rate capability testing was performed and the results compared to graphite performance. The rate capability of OSPC-1b and OSPC-0b was investigated, as was commercial graphite (for reference) at current densities from 75 to 7500 mA g⁻¹, as shown in Figure 12(a). OSPC-1b exhibited reversible capacities of 393, 347, and 309 mAh g⁻¹ at current densities of 1500, 3750 and 7500 mA g⁻¹. Figure 12(b) shows that OSPC-1b retained over half of its initial 577 mAh g⁻¹ capacity measured at 75 mA g⁻¹ at all current densities tested and recovered 94 % of its initial capacity after the third cycle through the waterfall plot. This compares well with OSPC-1a, which reported a specific capacity of 356 mAh g⁻¹ at a current density of 3000 mA g⁻¹, and with fast charging optimized carbon-based LIB anode materials.^{10,21,22} Moreover, Figure 12(b) shows that for OSPC-1b, capacity retention was close to 60% when cycled at a current density of 3750 mA/g, and still over 50% when cycled at 7500 mA/g. This compares favourably with OSPC-1a, for which capacity retention was only 38% when cycled at a lower current density of 3000 mA/g (see Fig. 4(e) of reference 10). Assessing relative decreases in performance in this manner removes any interference from other factors that might affect the absolute capacity values observed, such as optimisation of the electrode formulation.

OSPC-0b performed less well than OSPC-1b, with reversible capacities of 284, 239 and 201 mAh g⁻¹ at current densities of 1500, 3750 and 7500 mA g⁻¹ compared to a capacity of 396 mAh g⁻¹ at a current density of 75 mA g⁻¹. The capacity retention percentages of OSPC-0b were lower than OSPC-1b at all capacities tested, with the difference increasing with increasing current density. Computational assessment of the diffusion of lithium ions in OSPC-0 and OSPC-1 networks suggested that the diffusion rate of lithium will be lower in OSPC-0 than in OSPC-1 due to the denser more rigid network and smaller pore sizes.¹³ The results here appear to back this prediction as we would expect that fast charging would be more challenging in a system with slower diffusion rates, as is observed for OSPC-0.

Long-cycling data (up to 1000 cycles) were collected for OSPC-1b, shown in Figure 11 (c), shows exceptional reversibility at a current of 200 mA g⁻¹.

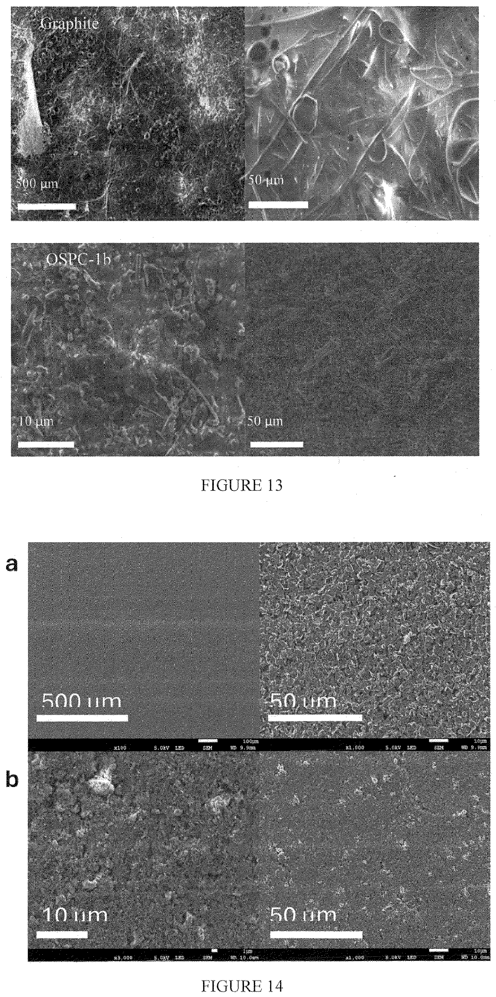

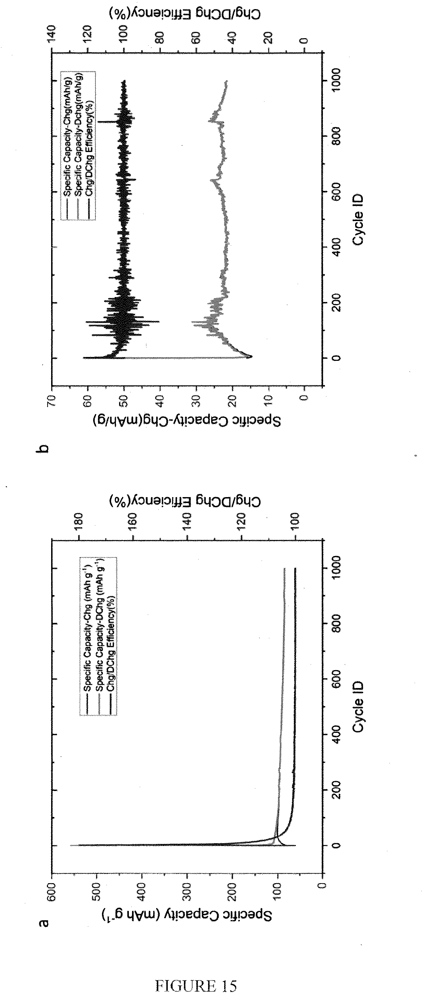

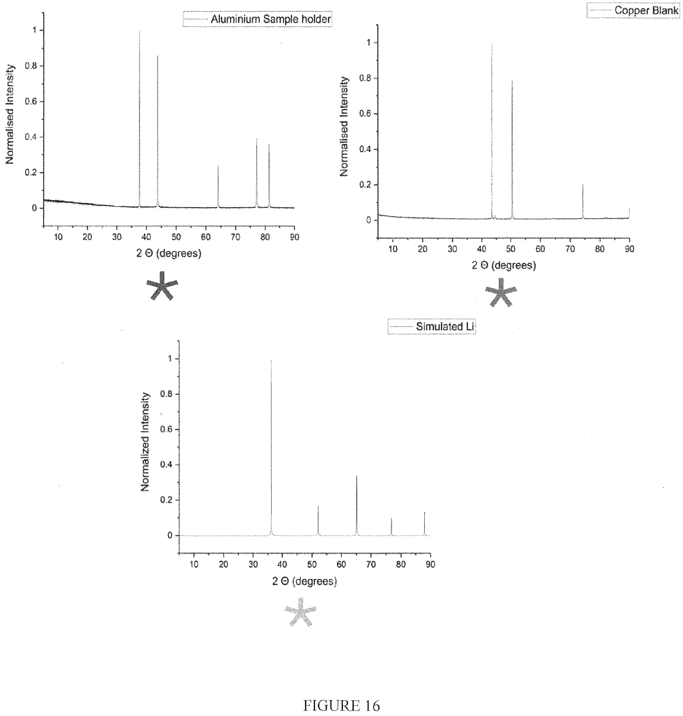

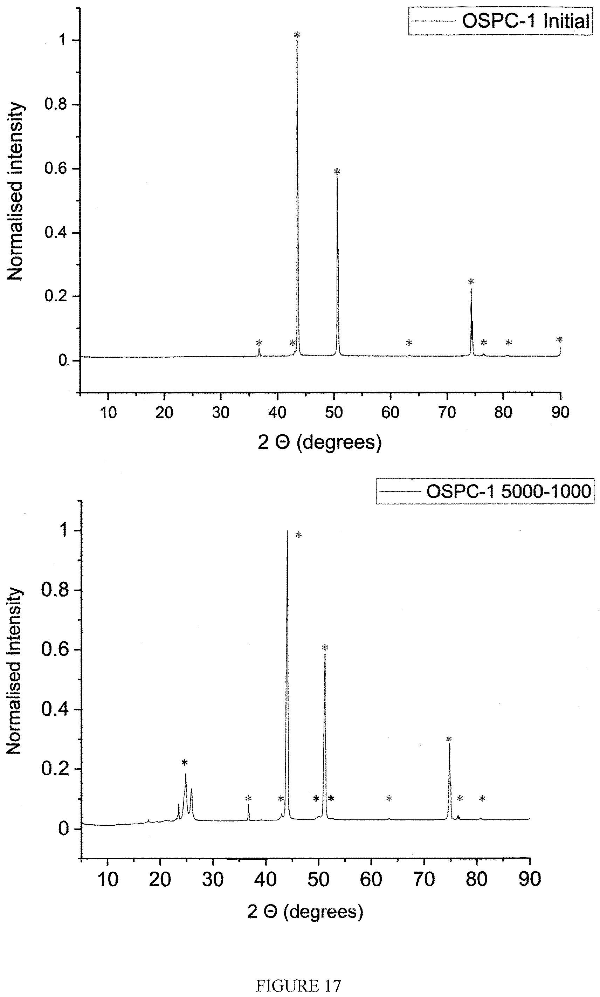

Over discharge experiments (in half-cells) were carried out to determine the resistance of OPSC-1b to lithium dendrite formation. Dendrites form from metallic lithium being deposited on the anode surface, reducing the ability to store charge in the material. These can further grow across to the cathode, resulting in a short circuit and leading to potentially catastrophic failure of the battery. Figure 13 shows SEM images of the over-discharged electrodes. In the used graphite sample, ball or pebble like features at 50 µm scale can be seen across the surface at 500 µm scale. In the OSPC-1b samples these features are substantially smaller and less prevalent. For reference, pristine electrodes are shown in Figure 14. The presence of these ball or pebble like deposits was attributed to electrodeposited lithium metal in a globule or moss type morphology. Mossy lithium is a precursor to dendrite growth, which are observed in the graphite cells. The absence of mossy lithium on OSPC-1b suggests resistance to dendrite growth. To further probe the resilience of OSPC-1b electrodes, equivalent OSPC-1b and graphite cells were subjected to a stress test cycling pattern of 1000 cycles at 5000 mA g⁻¹. After this, they were examined by XRD to capture a more bulk view of the electrode surface than is possible with SEM, and the results are shown in Figures 15-18. For the OSPC-1b anode, some graphitization was seen after the stress test, but no metallic lithium. The graphite anode exhibited severe degradation of the graphite lattice from intercalated lithium and the effect of repeated intercalation and deintercalation of lithium from the stress test's conditions, as well as the presence of a lithium metal impurity phase.

### 4. Conclusions

In conclusion, it has been shown that an OSPC-1 material (termed OSPC-1b) can be synthesised through a simple and fast one-pot method from commercially available reagents and giving larger yields of material with respect to OPSC-1a.¹⁰ Furthermore, OSPC-1b shows exceptional electrochemical properties, especially its fast-charging performance and outstanding resistance to degradation and lithium deposition. When compared with OSPC-1a, OSPC-1b shows better capacity retention at higher current density.

While specific embodiments of the invention have been described herein for the purpose of reference and illustration, various modifications will be apparent to a person skilled in the art without departing from the scope of the invention as defined by the appended claims.

### REFERENCES

(1) Wood, C. D.; Tan, B.; Trewin, A.; Niu, H.; Bradshaw, D.; Rosseinsky, M. J.; Khimyak, Y. Z.; Campbell, N. L.; Kirk, R.; Stoeckel, E.; et al. Hydrogen Storage in Microporous Hypercrosslinked Organic Polymer Networks,. Chem. Mat. 2007, 19, 2034-2048.
(2) Jiang, J.; Su, F.; Trewin, A.; Wood, C. D.; Campbell, N. L.; Niu, H.; Dickinson, C.; Ganin, A. Y.; Rosseinsky, M. J.; Khimyak, Y. Z.; et al. Angew. Chem. Int. Ed. 2007, 46, 1 - 5.
(3) Weber, J.; Thomas, A. Toward Stable Interfaces in Conjugated Polymers: Microporous Poly(p-phenylene) and Poly(phenyleneethynylene) Based on a Spirobifluorene Building Block. Journal of the American Chemical Society 2008, 130 (20), 6334-6335. DOI: 10.1021/ja801691x (acccessed 2012/08/13).
(4) McKeown, N. B.; Budd, P. M. Polymers of intrinsic microporosity (PIMs): organic materials for membrane separations, heterogenous catalysis and hydrogen storage. Chem. Soc. Rev. 2006, 35, 675-683.
(5) Kuhn, P.; Antonietti, M.; Thomas, A. Angew. Chem. Int. Ed. 2008, 47, 3450-3453.
(6) Liu, A.; Mollart, C.; Trewin, A.; Fan, X.; Lau, C. H. Photo-Modulating CO2 Uptake of Hypercrosslinked Polymers Upcycled from Polystyrene Waste. ChemSusChem 2023, 16 (10), e202300019. DOI: https://doi.org/10.1002/cssc.202300019.
(7) Wang, C.; Yau, T.; Xing, G.; Bailey, S.; Lambert, C.; Fayon, P.; Trewin, A.; Ben, T. Electron and proton conducting framework organic salt single crystals. J. Solid State Chem. 2022, 308, 122903.
(8) Fayon, P.; Thomas, J. M. H.; Trewin, A. Structure and Properties of a Nanoporous Supercapacitor. J. Phys. Chem. C 2016, 120 (45), 25880-25891. DOI: 10.1021/acs.jpcc.6b08712.
(9) Kou, Y.; Xu, Y.; Guo, Z.; Jiang, D. Supercapacitive Energy Storage and Electric Power Supply Using an Aza-Fused π-Conjugated Microporous Framework. Angew. Chem. - Int. Ed. 2011, 50 (37), 8753-8757. DOI: https://doi.org/10.1002/anie.201103493 (acccessed 2023/11/28).
(10) Zhao, Z.; Das, S.; Xing, G.; Fayon, P.; Heasman, P.; Jay, M.; Bailey, S.; Lambert, C.; Yamada, H.; Wakihara, T.; et al. A 3D Organically Synthesized Porous Carbon Material for Lithium-Ion Batteries. Angewandte Chemie International Edition 2018, 57 (37), 11952-11956. DOI: 10.1002/anie.201805924.
(11) Frenck, L.; Sethi, G. K.; Maslyn, J. A.; Balsara, N. P. Factors That Control the Formation of Dendrites and Other Morphologies on Lithium Metal Anodes. Frontiers in Energy Research 2019, 7, Review. DOI: 10.3389/fenrg.2019.00115.
(12) Son, Y.; Lee, T.; Wen, B.; Ma, J.; Jo, C.; Cho, Y.-G.; Boies, A.; Cho, J.; De Volder, M. High energy density anodes using hybrid Li intercalation and plating mechanisms on natural graphite. Energy & Environmental Science 2020, 13 (10), 3723-3731, 10.1039/D0EE02230F. DOI: 10.1039/D0EE02230F.
(13) Wu, J.; Rui, X.; Wang, C.; Pei, W.-B.; Lau, R.; Yan, Q.; Zhang, Q. Nanostructured Conjugated Ladder Polymers for Stable and Fast Lithium Storage Anodes with High-Capacity. Advanced Energy Materials 2015, 5 (9), 1402189. DOI: https://doi.org/140.1002/aenm.201402189.
(14) Heasman, P.; Trewin, A. Uptake and Diffusion of Ions in Organically Synthesized Porous Carbon for Battery Anode Applications. The Journal of Physical Chemistry C 2019, 123 (42), 25603-25610. DOI: 10.1021/acs.jpcc.9b07878.
(15) Heasman, P.; Varley, E.; Trewin, A. Lithium-Ion Uptake and Diffusion in a Family of Organically Synthesized Porous Carbon. Energy & Fuels 2022, 36 (12), 6560-6568. DOI: 10.102 1/acs.energyfuels.2c00646.
(16) Dubale, A. A.; Su, W.-N.; Tamirat, A. G.; Pan, C.-J.; Aragaw, B. A.; Chen, H.-M.; Chen, C.-H.; Hwang, B.-J. The synergetic effect of graphene on Cu2O nanowire arrays as a highly efficient hydrogen evolution photocathode in water splitting. Journal of Materials Chemistry A 2014, 2 (43), 18383-18397, 10.1039/C4TA03464C. DOI: 10.1039/C4TA03464C.
(17) Ferrari, A. C.; Robertson, J.; Castiglioni, C.; Tommasini, M.; Zerbi, G. Raman spectroscopy of polyconjugated molecules and materials: confinement effect in one and two dimensions. Philosophical Transactions of the Royal Society of London. Series A: Mathematical, Physical and Engineering Sciences 2004, 362 (1824), 2425-2459. DOI: doi:10.1098/rsta.2004.1448.
(18) Li, X.; Geng, D.; Zhang, Y.; Meng, X.; Li, R.; Sun, X. Superior cycle stability of nitrogen-doped graphene nanosheets as anodes for lithium ion batteries. Electrochemistry Communications 2011, 13 (8), 822-825. DOI: https://doi.org/10.1016/j.elecom.2011.05.012.
(19) Yang, Z.-h.; Wu, H.-q. Electrochemical intercalation of lithium into fullerene soot. Materials Letters 2001, 50 (2), 108-114. DOI: https://doi.org/10.1016/S0167-577X(00)00425-0.
(20) Galinski, M.; Acznik, I. Study of a graphene-like anode material in N-methyl-N-propylpyrrolidinium bis(trifluoromethanesulfonyl)imide ionic liquid for Li-ion batteries. Journal of Power Sources 2012, 216, 5-10. DOI: https://doi.org/10.1016/j.jpowsour.2012.05.039.
(21) Zhu, G.-L.; Zhao, C.-Z.; Huang, J.-Q.; He, C.; Zhang, J.; Chen, S.; Xu, L.; Yuan, H.; Zhang, Q. Fast Charging Lithium Batteries: Recent Progress and Future Prospects. Small 2019, 15 (15), 1805389. DOI: https://doi.org/10.1002/smll.201805389 (acccessed 2024/02/23).
(22) Zhang, D.; Tan, C.; Zhang, W.; Pan, W.; Wang, Q.; Li, L. Expanded Graphite-Based Materials for Supercapacitors: A Review. In Molecules, 2022; Vol. 27.
(23) Li, Z. Q., Lu, C. J., Xia, Z. P., Zhou, Y., & Luo, Z. X-ray diffraction patterns of graphite and turbostratic carbon. Carbon, 2007, 45 (8), 1686-1695.
(24) Yuan, Fu, Junyang Hu, Yu Lei, Rongyi Zhao, Chongwei Gao, Huwei Wang, Baohua Li, Feiyu Kang, and Dengyun Zhai. Key Factor Determining the Cyclic Stability of the Graphite Anode in Potassium-Ion Batteries. ACS nano, 2022, 16 (8), 12511-12519.
(25) Wang, J.; Fu, X.; Yan, N.; Zhang, Y. Molecular Design of 3D Porous Carbon Framework via One-Step Organic Synthesis. ChemSusChem 2021, 14 (18), 3806-3809. DOI: https://doi.org/10.1002/cssc.202101262

## Claims

1. A material comprising:
a repeating unit of structure A: 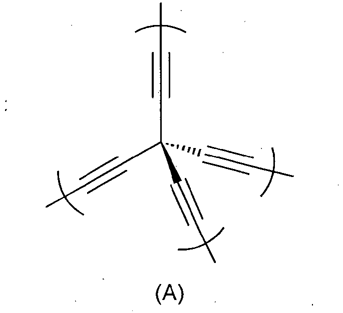 and
a plurality of end groups, each independently having a structure of formula I: 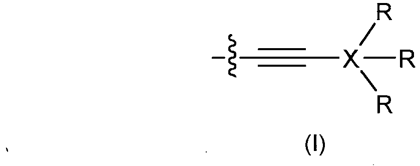
wherein
(i) X is C and each R is independently halo, tosylate, pseudohalide or a group of structure B: 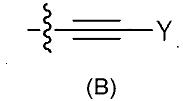 in which Y denotes a repeating unit of structure A, wherein at least one R is not a group of structure B;
and/or
(ii) X is Si and each R is independently alkyl, alkenyl or aryl.

2. The material as claimed in claim 1, wherein
(i) X is C and each R is independently halo or a group of structure B: 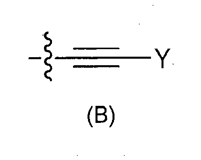 in which Y denotes a repeating unit of structure A, wherein at least one R is not a group of structure B;
and/or
(ii) X is Si and each R is independently selected from alkyl, alkenyl or aryl.

3. The material as claimed in claim 1 or 2, wherein each R is independently (1-4C)alkyl or phenyl.

4. The material as claimed in claim 1, 2 or 3, wherein the end group is trimethylsilyl, triethylsilyl, tripropylsilyl, triisopropylsilyl, tributylsilyl, triisobutylsilyl, tert-butyldimethylsilyl or tert-butyldiphenylsilyl.

5. The material as claimed in any one of the preceding claims, wherein halo is Br.

6. The material as claimed in any one of the preceding claims, wherein
(A) the material has a BET surface area of ≥500 m² g⁻¹ determined by N₂ gas sorption analysis; and/or
(B) the material has a total pore volume of ≥0.5 cm³ g⁻¹ determined by N₂ gas sorption analysis.

7. A process comprising the step of contacting, in an organic solvent, a strut precursor of formula II: 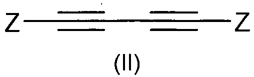
wherein each Z is a silyl group of formula -SiR¹₃, in which each R' is independently alkyl, alkenyl or aryl;
with
a compound, Q capable of removing both silyl groups from the strut precursor; and
a node precursor of formula III 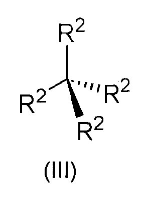
wherein each R² is independently halo, tosylate or pseudohalide.

8. The process as claimed in claim 7, wherein the compound, Q, or part thereof, is capable of forming a bond to the removed silyl group.

9. The process as claimed in claim 7 or 8, wherein the compound, Q is caesium fluoride.

10. The process as claimed in claim 7, 8 or 9, wherein each R¹ is independently (1-4C)alkyl or phenyl.

11. The process as claimed in any one of claims 7 to 10, wherein the silyl group is trimethylsilyl, triethylsilyl, tripropylsilyl, triisopropylsilyl, tributylsilyl, triisobutylsilyl, tert-butyldimethylsilyl or tert-butyldiphenylsilyl.

12. The process as claimed in any one of claims 7 to 11, wherein each R² is independently halo;
optionally wherein halo is Br.

13. The process as claimed in any one of claims 7 to 12, wherein the organic solvent is diphenylsulfone, mesitylene, 1,2-dichlorobenzene, N-methyl-2-pyrrolidine, diglyme or a mixture of two or more thereof.

14. An electrode comprising the material as claimed in any one of claims 1 to 6.

15. A battery comprising the electrode as claimed in claim 14.
